# EUROPÄISCHE PATENTSCHRIFT

(11) **EP 4 703 419 B1**
(45) Veröffentlichungstag und Bekanntmachung des Hinweises auf die Patenterteilung: **11.11.2026**
(21) Anmeldenummer: 24198042.4
(22) Anmeldetag: 03.09.2024
(51) Int. Cl.: C08K 5/00, C07C 29/149, C07C 31/27, C07C 67/38, C07C 69/608

(54) **WEICHMACHERZUSAMMENSETZUNG ENTHALTEND TRIMETHYLESTER DER 1,2,4-CYCLOHEXANTRIPROPIONSÄURE UND EIN TRIALKYLTRIMELLITAT**
PLASTICIZER COMPOSITION COMPRISING TRIMETHYLESTER OF 1,2,4-CYCLOHEXANETRIPROPIONIC ACID AND TRIALKYLTRIMELLITATE
COMPOSITION PLASTIFIANTE COMPRENANT DU TRIMETHYLATE DE L'ACIDE 1,2,4-CYCLOHEXANETRIPROPIONIQUE ET UN TRIMELLITATE DE TRIALKYLE

(43) Veröffentlichungstag der Anmeldung: 04.03.2026
(73) Patentinhaber: Evonik Oxeno GmbH & Co. KG, 45772 Marl (DE)
(72) Erfinder: GRASS, Michael, 45721 Haltern am See (DE); RUSEK, Monika, 45149 Essen (DE); VAN EICKELS, Michael, 45657 Recklinghausen (DE)
(74) Vertreter: Evonik Patent Association

(56) Entgegenhaltungen:
- EP-A1- 3 269 764
- EP-A1- 3 838 886
- EP-A1- 3 838 888

## Beschreibung

Gegenstand der Erfindung ist eine Weichmacherzusammensetzung enthaltend eine Verbindung der Formel (1) 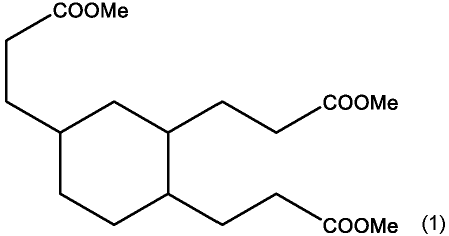 und mindestens ein Trialkyltrimellitat, wobei die beiden Alkylgruppen im Trialkyltrimellitat jeweils 4 bis 10 Kohlenstoffatome, vorzugsweise 4 bis 9 Kohlenstoffatome, weiterhin bevorzugt 4, 5, 8 oder 9 Kohlenstoffatome, besonderes bevorzugt 8 oder 9 Kohlenstoffatome aufweisen.

Die erfindungsgemäßen Verbindungen nach der Formel (1) sind Trimethylester der 1,2,4-Cyclohexantripropionsäure. Trimethylester der 1,2,4-Cyclohexantripropionsäure sind grundsätzlich bekannt und beispielsweise in der EP 3 838 886 A1 beschrieben worden. Dort wurde auch erwähnt, dass diese Ester der 1,2,4-Cyclohexantripropionsäure als Weichmacher eingesetzt werden können. Der Trimethylester wurde in diesem Zusammenhang als ein Produkt mit niedriger Geliertemperatur beschrieben.

Diese Ester zeigen beim Einsatz als Weichmacher in Kunststoffen nicht immer nur positive Eigenschaften. Würde man den Trimethylester nämlich als einzigen Weichmacher, beispielsweise in einer PVC-basierten Plastisol-Rezeptur einsetzen, würde das Plastisol eine recht hohe Viskosität aufweisen. Außerdem würde bei der Verarbeitung des Plastisols ein nicht unerheblicher Anteil des Trimethylesters verdampfen und somit nicht mehr im Endprodukt verbleiben.

Der vorliegenden Erfindung lag nun die Aufgabe zugrunde, eine Weichmacherzusammensetzung bereitzustellen, die den Trimethylester der 1,2,4-Cyclohexantripropionsäure enthält, aber bessere anwendungstechnische Eigenschaften aufweist.

Diese Aufgabe wird gelöst durch die Weichmacherzusammensetzung nach Anspruch 1. Gegenstand der Erfindung ist demnach eine Weichmacherzusammensetzung enthaltend eine Verbindung der Formel (1) 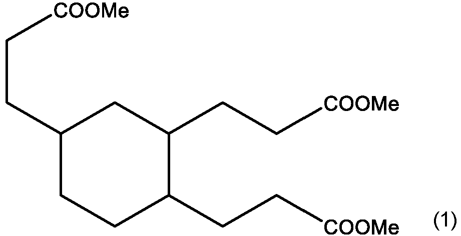 und mindestens ein Trialkyltrimellitat, wobei die beiden Alkylgruppen jeweils 4 bis 10 Kohlenstoffatome, vorzugsweise 4 bis 9 Kohlenstoffatome, weiterhin bevorzugt 4, 5, 8 oder 9 Kohlenstoffatome, besonderes bevorzugt 8 oder 9 Kohlenstoffatome aufweisen. Bevorzugte Ausführungsformen der vorliegenden Erfindung sind in den Unteransprüchen angegeben.

Der Trimethylester der 1,2,4-Cyclohexantripropionsäure, also die Substanz, die einen Teil der erfindungsgemäßen Weichmacherzusammensetzung darstellt, ist aktuell nicht kommerziell erhältlich. Ein Verfahren zur Herstellung dieser Ester wird aber beispielsweise in der EP 3 842 411 A1 beschrieben. Die Ester der 1,2,4-Cyclohexantripropionsäure sind somit allgemein zugänglich.

Neben den Trimethylestern der 1,2,4-Cyclohexantripropionsäure enthält die erfindungsgemäße Weichmacherzusammensetzung Trialkyltrimellitate, wobei die beiden Alkylgruppen jeweils unabhängig voneinander 4 bis 10 Kohlenstoffatome, vorzugsweise 4 bis 9 Kohlenstoffatome, weiterhin bevorzugt 4, 5, 8 oder 9 Kohlenstoffatome, besonderes bevorzugt 8 oder 9 Kohlenstoffatome aufweisen. Die entsprechenden Verbindungen können durch die nachfolgende Markush-Formel beschrieben werden, 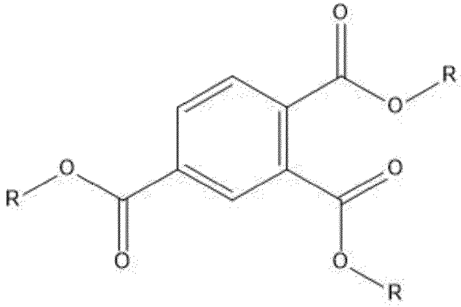 wobei die beiden Reste R jeweils unabhängig voneinander Alkylgruppen mit 4 bis 10 Kohlenstoffatomen, vorzugsweise 4 bis 9 Kohlenstoffatomen, weiterhin bevorzugt 4, 5, 8 oder 9 Kohlenstoffatomen, besonderes bevorzugt 8 oder 9 Kohlenstoffatomen sind.

Die beiden Alkylgruppen können dabei jeweils unabhängig voneinander aus der Gruppe, bestehend aus einer n-Butylgruppe, einer Isobutylgruppe, einer n-Pentylgruppe, einer 2-Methylbutylgruppe, einer 3-Methylbutylgruppe, einer n-Hexylgruppe, einer Isohexylgruppe, einer n-Octylgruppe, einer 2-Ethylhexylgruppe, einer n-Nonylgruppe, einer Isononylgruppe, einer n-Decylgruppe, einer Isodecylgruppe, einer 2-Propylheptylgruppe ausgewählt werden. Unter einer Isononylgruppe wird im Sinne der vorliegenden Erfindung eine Mischung aus linearen und verzweigten C9-Alkoholen verstanden.

Die drei Alkylgruppen des Trialkyltrimellitats können gleich oder unterschiedlich sein. Die vorliegende Erfindung umfasst also auch Mischester, bei denen die Alkylgruppen unterschiedliche Kettenlängen aufweisen. In einer bevorzugten Ausführungsform der vorliegenden Erfindung weisen die drei Alkylgruppen des Trialkyltrimellitats jeweils die gleiche Anzahl an Kohlenstoffatomen auf. Das bedeutet, dass beide Alkylgruppen 4, 5, 6, 7, 8 oder 9 Kohlenstoffatome aufweisen, aber nicht, dass beide Alkylgruppen immer identisch sein müssen. Es können also beispielsweise unterschiedliche Isomere als Alkylgruppe vorhanden sein.

Es ist im Rahmen der vorliegenden Erfindung besonders bevorzugt, dass das Trialkyltrimellitat in der erfindungsgemäßen Weichmacherzusammensetzung eine oder mehrere Verbindungen ausgewählt aus der Gruppe von Tri-n-butyltrimellitat (TBTM), Tri-isopentyltrimellitat (TIPTM), Tri-n-pentyl-trimellitat (TPTM), Tri-2-ethylhexyltrimellitat (TEHTM), Tri-isononyltrimellitat (TINTM) oder Tri-(n-C8/n-C10) trimellitat (T810TM) ist. Tri-isopentyltrimellitat meint im vorliegenden Fall, dass das Trimellitat aus den isomeren C5-Alkylresten n-Pentyl, 2-Methylbutyl oder 3-Methylbutyl aufgebaut ist. Bevorzugt enthält Tripentyltrimellitat zumindest zwei der drei Alkylgruppen, z. B. n-Pentyl und 2-Methylbutyl.

Die Herstellung der erfindungsgemäßen Trialkyltrimellitate kann über direkte Veresterung der Trimellitsäure (1,2,4-Benzoltricarbonsäure) oder Trimellitsäureanhydrid mit einem Alkohol mit 4 bis 10 Kohlenstoffatomen, vorzugsweise 4 bis 9 Kohlenstoffatomen, weiterhin bevorzugt 4, 5, 8 oder 9 Kohlenstoffatomen, besonderes bevorzugt 8 oder 9 Kohlenstoffatomen erfolgen. Der Alkohol wird dabei vorzugsweise im Überschuss eingesetzt, d. h. in einer Menge von mehr als 3 Mol pro Mol Säurekomponente. Die direkte Veresterung wird weiterhin bevorzugt an einem sauren Katalysator durchgeführt, beispielsweise anorganische, organische oder Lewis-Säuren.

Die Herstellung der erfindungsgemäßen Trialkyltrimellitat kann auch über eine Umesterung erfolgen, wobei ein Trialkyltrimellitat mit Alkylgruppen mit weniger als 4 Kohlenstoffatomen eingesetzt und mit einem Alkohol mit 4 bis 10 Kohlenstoffatomen, vorzugsweise 4 bis 9 Kohlenstoffatomen, weiterhin bevorzugt 4, 5, 8 oder 9 Kohlenstoffatomen, besonderes bevorzugt 8 oder 9 Kohlenstoffatomen umgeestert wird. Auch hier kann der Alkohol Kohlenstoffatomen im Überschuss eingesetzt werden.

Vorzugsweise erfolgt die Herstellung aber über die Veresterung von Trimellitsäureanhydrid mit einem Alkohol mit 4 bis 10 Kohlenstoffatomen, vorzugsweise 4 bis 9 Kohlenstoffatomen, weiterhin bevorzugt 4, 5, 8 oder 9 Kohlenstoffatomen, besonderes bevorzugt 8 oder 9 Kohlenstoffatomen. Es entstehen dabei Trialkyltrimellitsäureester bzw. Trialkyltrimellitate, deren Alkylgruppen entsprechend der Kettenlänge des eingesetzten Alkohols 4 bis 10 Kohlenstoffatome, vorzugsweise 4 bis 9 Kohlenstoffatome, weiterhin bevorzugt 4, 5, 8 oder 9 Kohlenstoffatome, besonderes bevorzugt 8 oder 9 Kohlenstoffatome aufweisen.

Die beiden Substanzen können in unterschiedlichen Mengen in der erfindungsgemäßen Weichmacherzusammensetzung vorhanden sein. Es sollte klar sein, dass die beiden Substanzen in einer Menge vorhanden sein müssen, bei der sie eine Wirkung entfalten, d. h. wo eine weichmachende Wirkung eintritt. In einer bevorzugten Ausführungsform der vorliegenden Erfindung liegen die Verbindung nach Formel (1) und das Trialkyltrimellitat in einem Gewichtsverhältnis (Verbindung nach Formel (1) : Trialkyltrimellitat) von 1 : 99 bis 99 : 1, vorzugsweise 10 : 90 bis 90 : 10, besonders bevorzugt 30 : 70 bis 70 : 30 in der Weichmacherzusammensetzung vor. In einer ganz besonders bevorzugten Ausführung der vorliegenden Erfindung liegen die Verbindung nach Formel (1) und das Trialkyltrimellitat in einem Gewichtsverhältnis (Verbindung nach Formel (1) : Trialkyltrimellitat) von 30 : 70 bis 5 : 95 in der Weichmacherzusammensetzung vor.

Die erfindungsgemäße Weichmacherzusammensetzung der vorliegenden Erfindung kann zusätzlich ein epoxidiertes Öl oder einen epoxidierten Alkylester einer Fettsäure enthalten. Epoxidierte Öle oder entsprechende Ester können die thermische Stabilität und die mechanischen Eigenschaften verbessern.

Das epoxidierte Öl kann aus der Gruppe bestehend aus epoxidiertem Sojabohnenöl, epoxidiertem Rizinusöl, epoxidiertem Leinöl, epoxidiertem Palmöl, epoxidiertem Tallöl und Mischungen davon ausgewählt werden. Bevorzugt werden epoxidiertes Sojabohnenöl oder epoxidiertes Leinöl in der erfindungsgemäßen Weichmacherzusammensetzung eingesetzt. Besonders bevorzugt ist epoxidiertes Sojabohnenöl, das auch unter dem Akronym ESBO bekannt ist.

Die epoxidierten Fettsäureester können durch Umesterung der o.g. epoxidierten Öle mit Alkoholen im Bereich von 1 bis 10 Kohlenstoffatomen, bevorzugt 4 bis 9 Kohlenstoffatomen, hergestellt werden. Alternativ kann erst das natürliche Öl umgeestert und die Doppelbindungen der Fettsäure anschließend epoxidiert werden.

Das epoxidierte Öl oder die entsprechenden epoxidierten Fettsäurealkylester können in einer Menge von 1 bis 150 Gewichtsteilen bezogen auf 100 Gewichtsteile der Gesamtsumme aus der Verbindung gemäß Formel (1) und dem Trialkyltrimellitat eingesetzt werden. Das epoxidierte Öl oder die epoxidierten Fettsäureester können auch in Mengen von 2 bis 125 Gewichtsteilen, 5 bis 100 Gewichtsteilen, 10 bis 80 Gewichtsteilen oder 20 bis 70 Gewichtsteilen jeweils bezogen auf 100 Gewichtsteile der Gesamtsumme aus der Verbindung gemäß Formel (1) und dem Trialkyltrimellitat in der Weichmacherzusammensetzung enthalten sein.

Die erfindungsgemäße Weichmacherzusammensetzung kann zusätzlich noch mindestens einen weiteren Weichmacher enthalten, der aus der Gruppe, bestehend aus Adipaten, Benzoaten, beispielsweise Monobenzoaten oder Glycoldibenzoaten, chlorierten Kohlenwasserstoffen (sog. Chlorparaffinen), Citraten, epoxidierten Fettsäureestern, epoxidierten Pflanzenölen, epoxidierten acylierten Glyceriden, Furandicarboxylaten, Phosphaten, Succinaten, Sulfonamiden, Sulfonaten, Terephthalaten, Isophthalaten, Phthalaten, Cyclohexandicarboxylaten, Trimellitaten mit Ausnahme derjenigen, die Bestandteil der erfindungsgemäßen Weichmacherzusammensetzung sind und oligomeren oder polymeren Estern auf Basis von Adipin-, Bernstein- oder Sebacinsäure, ausgewählt wird.

In einer bevorzugten Ausführungsform der vorliegenden Erfindung enthält die Weichmacherzusammensetzung mindestens einen weiteren Weichmacher, der aus der Gruppe, bestehend aus Alkylbenzoaten, Alkylsulfonsäureestern des Phenols, Dialkyladipaten, Glycerinestern, C4-bis C6- Alkansäureester von Polyolen, Citronensäuretrialkylestern, acetylierten Citronensäuretrialkylestern, Glykoldibenzoaten, Dialkylterephthalaten, Dialkylphthalaten, Dialkylisophthalaten, Estern der Furandicarbonsäure, Dialkanoylestern von Dianhydrohexitolen (z.B. Isosorbid), epoxidierten Fettsäurealkylestern, Polymerweichmachern, beispielsweise der Polyadipate, Dialkylestern der 1,2-, 1,3- oder 1,4-Cyclohexandicarbonsäure und Trialkylestern der Trimellitsäure mit Ausnahme derjenigen, die Bestandteil der erfindungsgemäßen Weichmacherzusammensetzung sind, ausgewählt wird.

In einer weiterhin bevorzugten Ausführungsform wird der mindestens eine weitere Weichmacher, der in der erfindungsgemäßen Weichmacherzusammensetzung enthalten sein kann, aus der Gruppe, bestehend aus C8- bis C13-Alkylbenzoaten, C4- bis C10-Dialkyladipaten, Pentaerythrit-tetravalerat, acetylierten Citronensäuretrialkylestern mit C4 bis C9-Alkylgruppen, C4- bis C9-Dialkylterephthalaten, C4- bis C13-Dialkylphthalaten, insbesondere C9- bis C13-Dialkylphthalaten und C4- bis C10-Dialkylestern der ,2-, 1,3- oder 1,4-Cyclohexandicarbonsäure, ausgewählt.

Besonders bevorzugt werden von den Citraten Butyl- oder Pentylcitrate eingesetzt, die eine Acetylgruppe aufweisen können. Darunter fallen Acetyltributylcitrat und Acetyltripentylcitrat. Von den C4- bis C10-Dialkyladipaten sind Diethylhexyladipat (DEHA) und Diisononyladipat (DINA) bevorzugt. Von den C4- bis C9-Dialkylterephthalaten sind Dibutylterephthalat (DBT), Dipentylterephthalat (DPT) und Diethylhexylterephthalat (DEHT bzw. DOTP) bevorzugt. Von den C4- bis C10-Dialkylestern der 1,2-Cyclohexandicarbonsäure sind der 1,2-Diethylhexylcyclohexandicarbonsäureester (1,2-DEHCH) und der 1,2-Diisononylcyclohexandicarbonsäureester (DINCH) bevorzugt. Von den C4- bis C10-Dialkylestern der 1,4-Cyclohexandicarbonsäure sind der 1,4-Diethylhexylcyclohexandicarbonsäureester (1,4-DEHCH) und der 1,4-Diisononylcyclohexandicarbonsäureester (DINCD) bevorzugt.

Ein weiterer Gegenstand der vorliegenden Erfindung ist eine Kunststoffzusammensetzung, die einen Kunststoff und die Weichmacherzusammensetzung, umfassend die Verbindung der Formel (1) und mindestens ein Trialkyltrimellitat, wobei die beiden Alkylgruppen jeweils 4 bis 10 Kohlenstoffatome, vorzugsweise 4 bis 9 Kohlenstoffatome, weiterhin bevorzugt 4, 5, 8 oder 9 Kohlenstoffatome, besonderes bevorzugt 8 oder 9 Kohlenstoffatome aufweisen, enthält. Die Kunststoffzusammensetzung kann zudem das epoxidierte Öl und /oder ein epoxidierten Fettsäurealkylester und/oder mindestens einen zusätzlichen Weichmacher aus der oben genannten Liste enthalten.

Geeignete Kunststoffe sind polymere Substanzen, die vorzugsweise aus der Gruppe, bestehend aus PVC (Polyvinylchlorid), Homo- oder Copolymere auf Basis von Ethylen, Propylen, Butadien, Vinylacetat, Glycidylacrylat, Glycidylmethacrylat, Ethylacrylat, Butylacrylat oder Methacrylat mit Alkoxyresten von verzweigten oder unverzweigten Alkoholen mit einem bis zehn Kohlenstoffatom(en), Acrylnitril oder cyclischen Olefinen, Polyvinylidenchlorid (PVDC), Polyacrylaten, insbesondere Polymethylmethacrylat (PMMA), Polyalkylmethacrylat (PAMA), Polyharnstoffe, silylierte Polymere, Fluorpolymere, insbesondere Polyvinylidenfluorid (PVDF), Polytetrafluorethylen (PTFE), Polyvinylacetat (PVAc), Polyvinylalkohol (PVA), Polyvinylacetale, insbesondere Polyvinylbutyral (PVB), Polystyrolpolymere, insbesondere Polystyrol (PS), expandierbares Polystyrol (EPS), Acrylonitril-Styrol-Acrylat (ASA), Styrolacrylonitril (SAN), Acrylonitril-Butadien-Styrol (ABS), Styrol-Maleinsäureanhydrid-Copolymer (SMA), Styrol-Methacrylsäure-Copolymer, Polyolefine, insbesondere Polyethylen (PE) oder Polypropylen (PP), thermoplastische Polyolefine (TPO), Polyethylen-Vinylacetat (EVA), Polycarbonate, Polyethylenterephthalat (PET), Polybutylenterephthalat (PBT), Polyoxymethylen (POM), Polyamid (PA), Polyethylenglykol (PEG), Polyurethan (PU), Thermoplastisches Polyurethan (TPU), Polysulfide (PSu), Biopolymere, insbesondere Polymilchsäure (PLA), Polyhydroxybutyral (PHB), Polyhydroxyvaleriansäure (PHV), Polyester, Stärke, Cellulose und Cellulose-Derivate, insbesondere Nitrocellulose (NC), Ethylcellulose (EC), Celluloseacetat (CA), Cellulose-Acetat/Butyrat (CAB), Gummi und Silikonen, ausgewählt werden.

In einer bevorzugten Ausführungsform ist der Kunststoff in der Weichmacherzusammensetzung ausgewählt aus der Gruppe bestehend aus Polyvinylchlorid (PVC), Polyalkylmethacrylat (PAMA), Polyvinylbutyral (PVB), Polyurethan, Polysulfide, Polymilchsäure (PLA), Polyhydroxybutyral (PHB), Nitrocellulose und Co-Polymeren von Vinylchlorid mit Vinylacetat oder mit Butylacrylat. Besonders bevorzugt ist hiervon PVC als Kunststoff in der erfindungsgemäßen Kunststoffzusammensetzung.

Die Menge an der erfindungsgemäßen Weichmacherzusammensetzung in der Kunststoffzusammensetzung beträgt vorzugsweise 5 bis 150 Gewichtsteile, bevorzugt 10 bis 120 Gewichtsteile, besonders bevorzugt 15 bis 110 Gewichtsteile und ganz besonders bevorzugt 20 bis 100 Gewichtsteile pro 100 Gewichtsteile des Kunststoffs.

Die Kunststoffzusammensetzung kann neben den erwähnten Inhaltsstoffen zusätzliche Additive enthalten. Beispiele für zusätzliche Additive sind rheologische Additive, mit denen die Viskosität der Kunststoffzusammensetzung verringert werden kann. Beispiele für bekannte rheologische Additive sind die unter den Handelsnamen VISCOBYK^{®}-5120, VISCOBYK^{®}-5130 und VISCOBYK^{®}-4041 erhältlichen Produkte. Die Additive können in einem Anteil von 1 bis 12, bevorzugt 2 bis 10 Gewichtsteilen pro 100 Gewichtsteilen PVC in der Kunststoffzusammensetzung enthalten sein.

Darüber hinaus kann die Kunststoffzusammensetzung einen oder mehrere Thermostabilisator(en) enthalten. Geeignete Thermostabilisatoren sind Bleisalze, Organozinnverbindungen, Barium/Zinkverbindungen, Cadmiumverbindungen oder Zinkverbindungen, Calcium/Zink-Stabilisatoren und organisch-basierte Stabilisatoren (sog. OBS). Bevorzugte Thermostabilisatoren sind Barium/Zinkverbindungen, Calcium/Zink-Stabilisatoren und organisch-basierte Stabilisatoren (sog. OBS).

Der Anteil des oder der Stabilisatoren in der Kunststoffzusammensetzung beträgt vorzugsweise 1 bis 4 Gewichtsteile pro 100 Gewichtsteilen PVC.

Als weitere Additive können darüber hinaus auch Füllstoffe, Pigmente, Treibmittel und Gleitmittel in der Kunststoffzusammensetzung enthalten sein.

Die erfindungsgemäße Kunststoffzusammensetzung ist vorzugsweise Bestandteil eines Klebstoffs, einer Dichtungsmasse, einer Beschichtungsmasse, eines Lacks, einer Farbe, eines Plastisols, eines Dryblends, eines Schaums, eines Kunstleders, eines Fußbodenbelags, insbesondere dessen Deck- oder Schaumschicht, einer Dachbahn, eines Unterbodenschutzes, einer Gewebebeschichtung, eines Kabels, einer Drahtisolierung, eines Schlauchs, eines Extrusionsartikels, einer Folie, eines Gegenstands im Automobilinnenbereich, einer Tapete, einer Tinte, eines Spielzeugs, einer Kontaktfolie, einer Lebensmittelverpackung oder eines medizinischen Artikels, insbesondere eines Schlauchs oder eines Blutbeutels.

Gegenstand der vorliegenden Erfindung ist deshalb auch die Verwendung der Kunststoffzusammensetzung in Klebstoffen, Dichtungsmassen, Beschichtungsmassen, Lacken, Farben, Plastisolen, Schäumen, Kunstleder, Fußbodenbelägen, insbesondere Deck- und Schaumschicht, Dachbahnen, Unterbodenschutz, Gewebebeschichtungen, Kabeln, Drahtisolierungen, Schläuchen, Extrusionsartikeln, Folien, im Automobilinnenbereich, in Tapeten, Tinten, Spielzeug, Kontaktfolien, Lebensmittelverpackungen oder medizinischen Artikeln, insbesondere in Schläuchen oder Blutbeuteln.

Die vorliegende Erfindung wird nachfolgend anhand von Beispielen illustriert. Die folgenden Beispiele sollen die Erfindung erläutern, ohne deren Anwendungsbreite, die sich aus der Beschreibung und den Patentansprüchen ergibt, einzuschränken.

### Beispiele

### Beispiel 1 - Herstellung von Cyclohexan-1,2,4-tripropionsäuretrimethylester (Me-Tc)

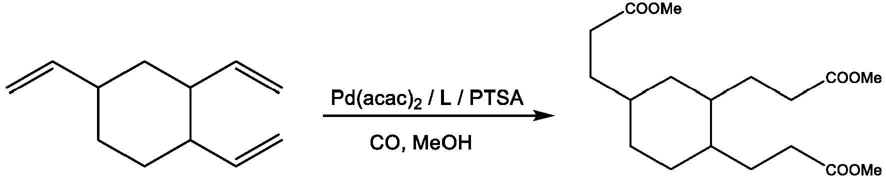

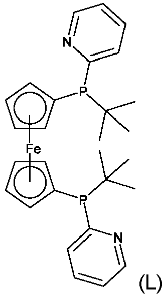

[Pd(acac)2] (15,2 mg, 0,1 mol%), der Katalysator L (103 mg, 0,4 mol%) und p-Toluolsulfonsäure (PTSA) (143 mg, 1,5 mol%) wurden unter einer Argonatmosphäre in einen 100-ml-Stahlautoklaven gegeben. Dann wurden MeOH (30 ml) und Trivinylcyclohexan (8,1 g, 50 mmol) mittels einer Spritze injiziert. Der Autoklav wurde dreimal mit CO gespült und anschließend mit einem CO-Druck von 40 bar beaufschlagt. Die Reaktion erfolgte über 10 h bei 110 °C. Danach wurde der Autoklav auf Raumtemperatur abgekühlt und entspannt. Das gewünschte Produkt wurde durch Destillation (165 °C bei 10⁻³ bar) aufgereinigt und mit ¹H-, ¹³C-NMR und HR-MS charakterisiert (15,6 g, 91% Ausbeute).

### Beispiel 2 - Herstellung von Plastisolen

Es wurden PVC-Plastisole hergestellt, wie sie beispielsweise zur Fertigung von Deckstrichfilmen für Fußbodenbeläge verwendet werden. Die Angaben in der Plastisolrezeptur sind jeweils in Gewichtsteilen (phr). Die Rezeptur der Polymerzusammensetzung ist in Tabelle 1 und 2 aufgelistet.

**Tabelle 1: Übersicht der hergestellten Plastisole.**

| Plastisol | 1* | 2* | 3* | 4* |
|---|---|---|---|---|
| | phr | phr | phr | phr |
| PVC (Vestolit^{®} P 1430 K 70 Ultra; Fa. Vestolit) | 100 | 100 | 100 | 100 |
| Me-Tc (gem. Bsp. 1) | 16,67 | 25 | 33,33 | 16,67 |
| ELATUR^{®} TM (Triisononyltrimellitat, Fa. Evonik Oxeno GmbH & Co. KG) | 33,33 | 25 | 16,67 | |
| Edenol TOT (Tri-2-ethylhexyltrimellitat (TOTM), Fa. Emery) | | | | 33,33 |
| epoxidiertes Sojabohnenöl als Co-Stabilisator (Edenol^{®} D81, Fa. Emery) | 3 | 3 | 3 | 3 |
| Thermostabilisator auf Ca/Zn-Basis (Reagens MBL 197/9 PF) | 2 | 2 | 2 | 2 |

| | | | | |
|---|---|---|---|---|
| * = erfindungsgemäße Zusammensetzung phr = parts per hundred parts resin | | | | |

**Tabelle 2: Übersicht der hergestellten Plastisole.**

| Plastisol | 5* | 6* | 7 | 8 |
|---|---|---|---|---|
| | phr | phr | phr | phr |
| PVC (Vestolit^{®} P 1430 K 70 Ultra; Fa. Vestolit) | 100 | 100 | 100 | 100 |
| Me-Tc (gem. Bsp. 1) | 25 | 33,33 | 0 | 0 |
| ELATUR^{®} TM (Triisononyltrimellitat, Fa. Evonik Oxeno GmbH & Co. KG) | | | 50 | |
| Edenol TOT (Tri-2-ethylhexyltrimellitat (TOTM), Fa. Emery) | 25 | 16,67 | | 50 |
| epoxidiertes Sojabohnenöl als Co-Stabilisator (Edenol^{®} D81, Fa. Emery) | 3 | 3 | 3 | 3 |
| Thermostabilisator auf Ca/Zn-Basis (Reagens MBL 197/9 PF) | 2 | 2 | 2 | 2 |

| | | | | |
|---|---|---|---|---|
| * = erfindungsgemäße Zusammensetzung phr = parts per hundred parts resin | | | | |

Zuerst wurden die flüssigen und dann die pulverförmigen Bestandteile in einen PE-Becher eingewogen. Von Hand wurde die Mischung mit einem Spatel so eingerührt, dass kein unbenetztes Pulver mehr vorhanden war. Der verschlossene Becher wurde in die im Speedmixer befindliche Halterung gestellt und vermischt sowie entlüftet. Nach Beenden der Vermischung wurde die Temperatur des Plastisols mit Hilfe eines IR-Thermometers gemessen. Danach wurde das Plastisol sofort für weitere Untersuchungen in einem Klimaschrank bei 25,0 °C temperiert.

### Beispiel 3 - Gelierverhalten der Plastisole

Die Untersuchung des Gelierverhaltens der Plastisole aus Beispiel 2 wurde mittels Physica MCR 101 im Oszillationsmodus mit einem Platte-Platte Messsystem (PP25), welches schubspannungsgesteuert betrieben wurde, vorgenommen. Eine zusätzliche Temperierhaube wurde an das Gerät angeschlossen, um eine homogene Wärmeverteilung und eine gleichmäßige Probentemperatur zu erreichen.

### Folgende Parameter wurden eingestellt:

### Modus: Temperatur-Gradient

| | |
|---|---|
| Start-Temperatur: | 25 °C |
| End-Temperatur: | 180 °C |
| Heiz/Kühlrate: | 5 °C/min |
| Oszillations-Frequenz: | 4 bis 0,1 Hz Rampe logarithmisch |
| Kreisfrequenz Omega: | 10 s⁻¹ |
| Anzahl Messpunkte: | 63 |
| Messpunktdauer: | 0,5 min |
| Automatische Spaltnachführung F: | 0 N |
| Konstante Messpunktdauer | |
| Spaltweite | 0,5 mm |

### Durchführung der Messung

Auf die untere Messsystemplatte wurden mit dem Spatel einige Gramm der zu messenden Paste luftblasenfrei aufgetragen. Dabei wurde darauf geachtet, dass nach dem Zusammenfahren des Messsystems etwas Paste gleichmäßig aus dem Messsystem herausquellen konnte (nicht mehr als 6 mm rundum). Der Überschuss wurde mittels Spatel entfernt. Anschließend wurde die Temperierhaube über der Probe positioniert und die Messung gestartet. Bestimmt wurde die komplexe Viskosität der Paste nach 24 Stunden (Lagerung der Paste bei 25 °C in einem Temperierschrank der Fa. Memmert) in Abhängigkeit von der Temperatur.

Als Maß für die Gelierung wurde ein deutlicher Anstieg der komplexen Viskosität betrachtet. Als Vergleichswert wurde daher die Temperatur bei Erreichen einer Pastenviskosität von 1000 Pa*s verwendet. Die erhaltenen Ergebnisse sind in Tabelle 3 aufgeführt.

**Tabelle 3: Gelierung der Plastisole nach 24 Stunden, Temperatur in °C bei Erreichen einer Pastenviskosität von 1000 Pa*s**

| Rezeptur | Weichmacherzusammensetzung nach Tabelle 1 und 2 | Geliertemperatur [°C] |
|---|---|---|
| 1* | TINTM : Me-Tc 2:1 | 76,5 |
| 2* | TINTM : Me-Tc 1:1 | 70,5 |
| 3* | TINTM : Me-Tc 1:2 | 66,9 |
| 4* | TOTM : Me-Tc 2:1 | 74,1 |
| 5* | TOTM : Me-Tc 1:1 | 69,6 |
| 6* | TOTM : Me-Tc 1:2 | 66,1 |
| 7 | TINTM | 126,9 |
| 8 | TOTM | 112,9 |

| | | |
|---|---|---|
| * ertindungsgemäß | | |

Im Vergleich mit bekannten Trimellitaten sorgt der Einsatz des Cyclohexan-1,2,4-tripropionsäuretrimethylesters (Me-Tc) in einer Weichmacherzusammensetzung für eine deutliche Reduktion der Geliertemperatur. Wird mehr Me-Tc eingesetzt, kann die Geliertemperatur weiter gesenkt werden.

### Beispiel 4 - Herstellung von Folien

Die im Beispiel 2 hergestellten Plastisole wurden jeweils zu 1 mm dicken Folien verarbeitet. Dazu wurde zunächst Hochglanztrennpapier (Fa. Sappi, Italien) auf eine Größe von 30 x 44 cm zugeschnitten und im Spannrahmen der Streicheinrichtung LTSV für den Mathis-Ofen eingelegt. Danach wurde der Spannrahmen auf den Führungsrahmen aufgelegt, der Mathis-Ofen (Typ LTF) auf 200 °C eingestellt und der Rahmen nach Erreichen dieser Temperatur 15 Sekunden vorgewärmt. Danach wurde die Rakel in die Einspannvorrichtung gelegt und der Rakelspalt über Vorversuche so eingestellt, dass die Foliendicke nach Abschluss der Gelierung 1 mm (+/- 0,05 mm) betrug. Auf den vorderen Rand des Papiers wurde ein Klebestreifen angebracht, um überschüssiges Plastisol aufzufangen. Danach wurde das Plastisol vor der Rakel aufgetragen und diese durch Ziehen des Führungsrahmens mit der Rakel über das eingespannte Trennpapier verstrichen (3 m/min Geschwindigkeit). Danach wurde die Rakel herausgenommen und der Klebestreifen mit dem überschüssigen Plastisol abgenommen. Anschließend wurde der Spannrahmen in den Ofen eingefahren. Nach der Gelierung (2 Minuten bei 200 °C) wurde der Rahmen wieder aus dem Ofen herausgefahren und nach Abkühlen die Folie von dem Papier abgezogen.

### Beispiel 5 - Bestimmung der Shore A Härte

Aus den nach Beispiel 4 hergestellten Folien wurden 4,8 x 4,8 cm² große Stücke geschnitten. Diese wurden in einen Pressrahmen zu 6-8 Lagen, je nach Folienstärke, gestapelt und bei 170 °C und 200 bar verpresst. Hiernach wurden die Prüfkörper für mind. 16 h im Klimaraum unter Normklima (25°C, 50 % Raumfeuchte) konditioniert und anschließend in Anlehnung an DIN 48-4 mit einem Shore-A-Messgerät der Fa. Zwick-Roell vermessen. Dabei wurden die Messwerte nach 3 Sekunden abgelesen. An jedem Prüfkörper wurden Messungen an drei verschiedenen Stellen durchgeführt und der Mittelwert gebildet. Die Ergebnisse sind in Tabelle 4 aufgeführt.

**Tabelle 4: Shore A Härten der gepressten Prüfkörper.**

| Rezeptur | Weichmacherzusammensetzung nach Tabelle 1 und 2 | Shore A |
|---|---|---|
| 1* | TINTM : Me-Tc 2:1 | 85 |
| 2* | TINTM : Me-Tc 1:1 | 81 |
| 3* | TINTM : Me-Tc 1:2 | 79 |
| 4* | TOTM : Me-Tc 2:1 | 82 |
| 5* | TOTM : Me-Tc 1:1 | 79 |
| 6* | TOTM : Me-Tc 1:2 | 77 |
| 7 | TINTM | 90 |
| 8 | TOTM | 86 |

Die erfindungsgemäßen Zusammensetzungen zeigen eine deutliche Verbesserung in der weichmachenden Wirkung und weichmachenden Effizienz.

## Patentansprüche

1. Weichmacherzusammensetzung enthaltend eine Verbindung der Formel (1) 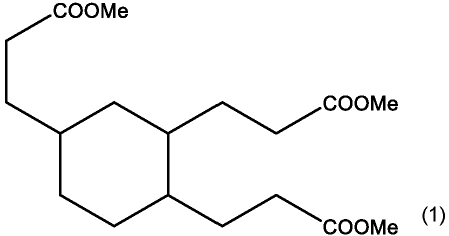 und mindestens ein Trialkyltrimellitat, wobei die beiden Alkylgruppen jeweils 4 bis 10 Kohlenstoffatome, vorzugsweise 4 bis 9 Kohlenstoffatome, weiterhin bevorzugt 4, 5, 8 oder 9 Kohlenstoffatome, besonderes bevorzugt 8 oder 9 Kohlenstoffatome aufweisen.

2. Weichmacherzusammensetzung nach Anspruch 1, wobei die beiden Alkylgruppen jeweils unabhängig voneinander aus der Gruppe, bestehend aus einer n-Butylgruppe, einer Isobutylgruppe, einer n-Pentylgruppe, einer 2-Methylbutylgruppe, einer 3-Methylbutylgruppe, einer n-Hexylgruppe, einer Isohexylgruppe, einer n-Octylgruppe, einer 2-Ethylhexylgruppe, einer n-Nonylgruppe, einer Isononylgruppe, einer n-Decylgruppe, einer Isodecylgruppe und einer 2-Propylheptylgruppe ausgewählt werden.

3. Weichmacherzusammensetzung nach Anspruch 1 oder 2, wobei die beiden Alkylgruppen die gleiche Anzahl an Kohlenstoffatomen aufweisen.

4. Weichmacherzusammensetzung nach einem der vorhergehenden Ansprüche, wobei das Trialkyltrimellitat Tri-n-butyltrimellitat (TBTM), Tri-isopentyltrimellitat (TIPTM), Tri-n-pentyl-trimellitat (TPTM), Tri-2-ethylhexyltrimellitat (TEHTM), Tri-isononyltrimellitat (TINTM) oder Tri-(n-C8/n-C10) trimellitat (T810TM) ist.

5. Weichmacherzusammensetzung nach einem der vorhergehenden Ansprüche, wobei die Verbindung nach Formel (1) und das Trialkyltrimellitat in einem Gewichtsverhältnis (Verbindung nach Formel (1) : Trialkyltrimellitat) von 1 : 99 bis 99 : 1, vorzugsweise 10 : 90 bis 90 : 10, besonders bevorzugt 30 : 70 bis 70 : 30 in der Weichmacherzusammensetzung vorhanden sind.

6. Weichmacherzusammensetzung nach einem der vorhergehenden Ansprüche, wobei die Weichmacherzusammensetzung zusätzlich ein epoxidiertes Öl oder einen epoxidierten Alkylester einer Fettsäure enthält.

7. Weichmacherzusammensetzung nach Anspruch 6, wobei das epoxidierte Öl aus der Gruppe bestehend aus epoxidiertem Sojabohnenöl, epoxidiertem Rizinusöl, epoxidiertem Leinöl, epoxidiertem Palmöl, epoxidiertem Stearat, epoxidiertem Oleat, epoxidiertem Tallöl, epoxidiertem Linoleat und Mischungen davon ausgewählt wird.

8. Weichmacherzusammensetzung nach Anspruch 7, wobei das epoxidierte Öl epoxidiertes Sojabohnenöl oder epoxidiertes Leinöl, vorzugsweise epoxidiertes Sojabohnenöl ist.

9. Weichmacherzusammensetzung nach einem der Ansprüche 6 bis 8, wobei das epoxidierte Öl in einer Menge von 1 bis 150 Gewichtsteilen bezogen auf 100 Gewichtsteile der Gesamtsumme aus der Verbindung gemäß Formel (1) und dem Trialkyltrimellitat in der Weichmacherzusammensetzung vorhanden ist.

10. Weichmacherzusammensetzung nach einem der vorherigen Ansprüche, wobei die Zusammensetzung zusätzlich noch einen weiteren Weichmacher aus der Gruppe, bestehend aus Adipaten, Benzoaten, beispielsweise Monobenzoaten oder Glycoldibenzoaten, chlorierten Kohlenwasserstoffen (sog. Chlorparaffinen), Citraten, epoxidierten Fettsäureestern, epoxidierten Pflanzenölen, epoxidierten acylierten Glyceriden, Furandicarboxylaten, Phosphaten, Succinaten, Sulfonamiden, Sulfonaten, Terephthalaten, Isophthalaten, Cyclohexandicarboxylaten, Trimellitaten und oligomeren oder polymeren Estern auf Basis von Adipin-, Bernstein- oder Sebacinsäure, ausgewählt werden.

11. Kunststoffzusammensetzung, umfassend die Weichmacherzusammensetzung nach einem der Ansprüche 1 bis 10 und einen Kunststoff.

12. Kunststoffzusammensetzung nach Anspruch 11, wobei der Anteil der Weichmacherzusammensetzung 5 bis 150 Gewichtsteile pro 100 Gewichtsteile Kunststoff beträgt.

13. Kunststoffzusammensetzung nach Anspruch 11 oder 12, wobei der Kunststoff aus der Gruppe, bestehend aus Polyvinylchlorid (PVC), Polyalkylmethacrylat (PAMA), Polyvinylbutyral (PVB), Polyurethan, Polysulfide, Polymilchsäure (PLA), Polyhydroxybutyral (PHB), Nitrocellulose und Co-Polymeren von Vinylchlorid mit Vinylacetat oder mit Butylacrylat, ausgewählt wird.

14. Kunststoffzusammensetzung nach Anspruch 13, wobei der Kunststoff Polyvinylchlorid (PVC) ist.

15. Verwendung der Kunststoffzusammensetzung nach einem der Ansprüche 11 bis 13 in Klebstoffen, Dichtungsmassen, Beschichtungsmassen, Lacken, Farben, Plastisolen, Schäumen, Kunstleder, Fußbodenbelägen, insbesondere Deck- und Schaumschicht, Dachbahnen, Unterbodenschutz, Gewebebeschichtungen, Kabeln, Drahtisolierungen, Schläuchen, Extrusionsartikeln, Folien, im Automobilinnenbereich, in Tapeten, Tinten, Spielzeug, Kontaktfolien, Lebensmittelverpackungen oder medizinischen Artikeln, insbesondere in Schläuchen oder Blutbeuteln.

## Claims

1. Plasticizer composition comprising a compound of the formula (1) 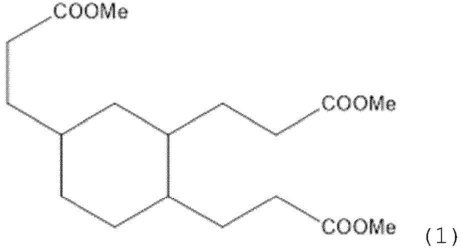 and at least one trialkyl trimellitate, where the two alkyl groups each have 4 to 10 carbon atoms, preferably 4 to 9 carbon atoms, further preferably 4, 5, 8 or 9 carbon atoms, more preferably 8 or 9 carbon atoms.

2. Plasticizer composition according to Claim 1, wherein the two alkyl groups are each independently selected from the group consisting of an n-butyl group, an isobutyl group, an n-pentyl group, a 2-methylbutyl group, a 3-methylbutyl group, an n-hexyl group, an isohexyl group, an n-octyl group, a 2-ethylhexyl group, an n-nonyl group, an isononyl group, an n-decyl group, an isodecyl group, and a 2-propylheptyl group.

3. Plasticizer composition according to Claim 1 or 2, wherein the two alkyl groups have the same number of carbon atoms.

4. Plasticizer composition according to any of the preceding claims, wherein the trialkyl trimellitate is tri-n-butyl trimellitate (TBTM), triisopentyl trimellitate (TIPTM), tri-n-pentyl trimellitate (TPTM), tri-2-ethylhexyl trimellitate (TEHTM), triisononyl trimellitate (TINTM) or tri-(n-C8/n-C10) trimellitate (T810TM).

5. Plasticizer composition according to any of the preceding claims, wherein the compound of formula (1) and the trialkyl trimellitate are present in the plasticizer composition in a weight ratio (compound of formula (1) : trialkyl trimellitate) of 1 : 99 to 99 : 1, preferably 10 : 90 to 90 : 10, more preferably 30 : 70 to 70 : 30.

6. Plasticizer composition according to any of the preceding claims, wherein the plasticizer composition additionally comprises an epoxidized oil or an epoxidized alkyl ester of a fatty acid.

7. Plasticizer composition according to Claim 6, wherein the epoxidized oil is selected from the group consisting of epoxidized soybean oil, epoxidized castor oil, epoxidized linseed oil, epoxidized palm oil, epoxidized stearate, epoxidized oleate, epoxidized tall oil, epoxidized linoleate and mixtures thereof.

8. Plasticizer composition according to Claim 7, wherein the epoxidized oil is epoxidized soybean oil or epoxidized linseed oil, preferably epoxidized soybean oil.

9. Plasticizer composition according to any of Claims 6 to 8, wherein the epoxidized oil is present in the plasticizer composition in an amount of 1 to 150 parts by weight based on 100 parts by weight of the sum total of the compound of formula (1) and the trialkyl trimellitate.

10. Plasticizer composition according to any of the preceding claims, wherein the composition additionally a further plasticizer from the group consisting of adipates, benzoates, for example monobenzoates or glycol dibenzoates, chlorinated hydrocarbons (called chloroparaffins), citrates, cyclohexanedicarboxylates, epoxidized fatty acid esters, epoxidized vegetable oils, epoxidized acylated glycerides, furandicarboxylates, isophthalates, phosphates, succinates, sulfonamides, sulfonates, terephthalates, trimellitates and oligomeric or polymeric esters based on adipic acid, succinic acid or sebacic acid are selected.

11. Plastics composition comprising the plasticizer composition according to any of Claims 1 to 10 and a plastic.

12. Plastics composition according to Claim 11, wherein the proportion of the plasticizer composition is 5 to 150 parts by weight per 100 parts by weight of plastic.

13. Plastics composition according to Claim 11 or 12, wherein the plastic is selected from the group consisting of polyvinylchloride (PVC), polyalkylmethacrylate (PAMA), polyvinylbutyral (PVB), polyurethane, polysulfides, polylactic acid (PLA), polyhydroxybutyral (PHB), nitrocellulose and copolymers of vinyl chloride with vinyl acetate or with butyl acrylate.

14. Plastics composition according to Claim 13, wherein the plastic is polyvinylchloride (PVC).

15. Use of the plastics composition according to any of Claims 11 to 13 in adhesives, sealing compounds, coating compounds, varnishes, paints, plastisols, foams, imitation leathers, floor coverings, especially the top layer and foam layer, roofing membranes, underbody protection, fabric coatings, cables, wire insulation, hoses, extruded articles, films, in the automotive interior sector, in wallpaper, inks, toys, contact sheets, food packaging or medical articles, especially in tubes or blood bags.

## Revendications

1. Composition plastifiante, contenant un composé de formule (1) 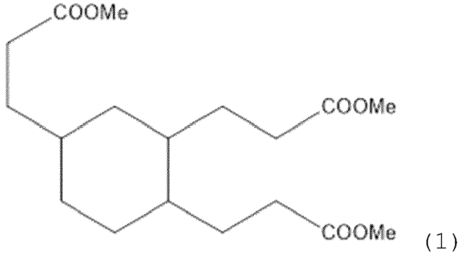 et au moins un trimellitate de trialkyle, les deux groupes alkyle présentant chacun 4 à 10 atomes de carbone, de préférence 4 à 9 atomes de carbone, encore préférablement 4, 5, 8 ou 9 atomes de carbone, plus préférablement 8 ou 9 atomes de carbone.

2. Composition plastifiante selon la revendication 1, dans laquelle les deux groupes alkyle sont choisis chacun indépendamment l'un de l'autre dans le groupe constitué d'un groupe n-butyle, d'un groupe isobutyle, d'un groupe n-pentyle, d'un groupe 2-méthylbutyle, d'un groupe 3-méthylbutyle, d'un groupe n-hexyle, d'un groupe isohexyle, d'un groupe n-octyle, d'un groupe 2-éthylhexyle, d'un groupe n-nonyle, d'un groupe isononyle, d'un groupe n-décyle, d'un groupe isodécyle et d'un groupe 2-propylheptyle.

3. Composition plastifiante selon la revendication 1 ou 2, les deux groupes alkyle présentant le même nombre d'atomes de carbone.

4. Composition plastifiante selon l'une quelconque des revendications précédentes, dans laquelle le trimellitate de trialkyle est le trimellitate de tri-n-butyle (TBTM), le trimellitate de tri-isopentyle (TIPTM), le trimellitate de tri-n-pentyle (TPTM), le trimellitate de tri-2-éthylhexyle (TEHTM), le trimellitate de triisononyle (TINTM) ou le trimellitate de tri-(n-C8/n-C10) (T810TM).

5. Composition plastifiante selon l'une quelconque des revendications précédentes, dans laquelle le composé selon la formule (1) et le trimellitate de trialkyle sont présents selon un rapport pondéral (composé selon la formule (1) : trimellitate de trialkyle) de 1 : 99 à 99 : 1, de préférence de 10 : 90 à 90 : 10, de manière particulièrement préférée de 30 : 70 à 70 : 30 dans la composition plastifiante.

6. Composition plastifiante selon l'une quelconque des revendications précédentes, la composition plastifiante contenant en plus une huile époxydée ou un ester alkylique époxydé d'un acide gras.

7. Composition plastifiante selon la revendication 6, l'huile époxydée étant choisie dans le groupe constitué par l'huile de germes de soja époxydée, l'huile de ricin époxydée, l'huile de lin époxydée, l'huile de palme époxydée, le stéarate époxydé, l'oléate époxydé, l'huile de tall époxydée, le linoléate époxydé et leurs mélanges.

8. Composition plastifiante selon la revendication 7, l'huile époxydée étant l'huile de germes de soja époxydée ou l'huile de lin époxydée, de préférence l'huile de germes de soja époxydée.

9. Composition plastifiante selon l'une quelconque des revendications 6 à 8, l'huile époxydée étant présente en une quantité de 1 à 150 parties en poids par rapport à 100 parties en poids de la quantité totale du composé selon la formule (1) et du trimellitate de trialkyle dans la composition plastifiante.

10. Composition plastifiante selon l'une quelconque des revendications précédentes, la composition en plus encore un autre plastifiant du groupe constitué par les adipates, les benzoates, par exemple les monobenzoates ou les dibenzoates de glycol, les hydrocarbures chlorés (appelés chloroparaffines), les citrates, les esters d'acide gras époxydés, les huiles végétales époxydées, les glycérides acylés époxydés, les furannedicarboxylates, les phosphates, les succinates, les sulfonamides, les sulfonates, les téréphtalates, les isophtalates, les cyclohexanedicarboxylates, les trimellitates et les esters oligomères ou polymères à base d'acide adipique, succinique ou sébacique sont choisis.

11. Composition de matériau synthétique comprenant la composition plastifiante selon l'une quelconque des revendications 1 à 10 et un matériau synthétique.

12. Composition de matériau synthétique selon la revendication 11, la proportion de composition plastifiante représentant 5 à 150 parties en poids par 100 parties en poids de matériau synthétique.

13. Composition de matériau synthétique selon la revendication 11 ou 12, le matériau synthétique étant choisi dans le groupe constitué par le poly(chlorure de vinyle) (PVC), le poly(méthacrylate d'alkyle) (PAMA), le polyvinylbutyral (PVB), le polyuréthane, le polysulfure, le poly(acide lactique) (PLA), le polyhydroxybutyral (PHB), la nitrocellulose et les copolymères du chlorure de vinyle avec de l'acétate de vinyle ou de l'acrylate de butyle.

14. Composition de matériau synthétique selon la revendication 13, le matériau synthétique étant le poly(chlorure de vinyle) (PVC).

15. Utilisation de la composition de matériau synthétique selon l'une quelconque des revendications 11 à 13 dans les adhésifs, les masses d'étanchéité, les masses de revêtement, les vernis, les peintures, les plastisols, les mousses, le cuir synthétique, les revêtements de sol, en particulier la couche de recouvrement et la couche de mousse, les membranes de toiture, la protection de bas de caisse, les revêtements de tissu, les câbles, les isolations de fil, les flexibles, les articles extrudés, les feuilles, à l'intérieur de véhicules, dans les tapis, les encres, les jouets, les films de contact, les emballages alimentaires ou les articles médicaux, en particulier dans les flexibles ou les poches à sang.
